Europäisches Patentamt

European Patent Office

Office européen des brevets

(19)

(11) Veröffentlichungsnummer : **0 370 344 B1**

(12) **EUROPÄISCHE PATENTSCHRIFT**

(45) Veröffentlichungstag der Patentschrift :
**13.01.93 Patentblatt 93/02**

(51) Int. Cl.⁵ : **C08L 51/08, C08L 51/04, C08L 51/00, C08L 25/12, C08L 33/12**

(21) Anmeldenummer : **89120974.4**

(22) Anmeldetag : **11.11.89**

(54) **Polymerblends mit guter Alterungsstabilität.**

(30) Priorität : **24.11.88 DE 3839588**

(43) Veröffentlichungstag der Anmeldung :
**30.05.90 Patentblatt 90/22**

(45) Bekanntmachung des Hinweises auf die
Patenterteilung :
**13.01.93 Patentblatt 93/02**

(84) Benannte Vertragsstaaten :
**DE ES FR GB IT NL**

(56) Entgegenhaltungen :
**EP-A- 0 154 244
EP-A- 0 220 160**

(56) Entgegenhaltungen :
**EP-A- 0 249 964
EP-A- 0 260 552
WO-A-85/02192
JP-A-47 030 751**

(73) Patentinhaber : **BAYER AG
W-5090 Leverkusen 1 Bayerwerk (DE)**

(72) Erfinder : **Eichenauer, Herbert, Dr.
Gustav-Heinemann-Strasse 3
W-4047 Dormagen 1 (DE)**
Erfinder : **Pischtschan, Alfred, Dr.
Zur Eiche 33
W-5067 Kürten (DE)**
Erfinder : **Lindner, Christian, Dr.
Im Wasserblech 11
W-5000 Köln 91 (DE)**

**Beschreibung**

Die Erfindung betrifft Polymerlegierungen mit guter Witterungs- und Alterungsbeständigkeit, guter Verarbeitbarkeit und hoher Zähigkeit bei tiefer Temperatur.

Polymerlegierungen mit guter Alterungsbeständigkeit sind bekannt, z.B. Pfropfpolymerisate auf Basis von vernetzten Acrylatkautschuken in Kombination mit einem thermoplastischen Harz, sogenannte ASA-Polymere (vgl. z.B. DE-AS 1 260 135, DE-OS 1 911 882, DE-OS 2 826 925, EP-A 71 098), und Pfropfpolymerisate auf Basis von Ethylen/Propylen/Dien-Kautschuken (EPDM-Kautschuke) in Kombination mit einem thermoplastischen Harz, sogenannte AES-Polymere (vgl. z.B. DE-OS 2 830 232, DE-OS 3 001 766, EP-A 121 327, EP-A 134 154).

Während sowohl ASA- als auch AES-Polymer gute Zähigkeiten bei Zimmertemperatur aufweisen, fällt die Zähigkeit mit sinkender Temperatur schnell ab und führt letztlich bei Temperaturen zwischen ca. 0°C und -40°C zum Sprödbruch.

Es wurde gefunden, daß thermoplastische Polymerlegierungen mit sehr guter Witterungsbeständigkeit bei gleichzeitig hoher Zähigkeit bei tiefer Temperatur erhalten werden, wenn AES-Systeme mit spezieller Teilchengröße der Kautschukphase mit ASA-Systemen mit spezieller Teilchengröße der Kautschukphase und mit Pfropfprodukten auf Basis von Siliconkautschuk mit spezieller Teilchengröße kombiniert werden. Die dabei resultierenden Polymerlegierungen zeichnen sich außerdem durch eine verbesserte thermoplastische Verarbeitbarkeit aus.

Gegenstand der vorliegenden Erfindung sind thermoplastische Formmassen aus

A) 5 bis 95 Gew.-Teilen, vorzugsweise 20 bis 80 Gew.-Teilen eines Pfropfproduktes eines Gemisches von 50 bis 100 Gew.-Teilen, vorzugsweise 60 bis 95 Gew.-Teilen, Styrol, $\alpha$-Methylstyrol, Vinyltoluol vorzugsweise p-Methylstyrol, Methylmethacrylat oder Mischungen daraus und 0 bis 50 Gew.-Teilen, vorzugsweise 5 bis 40 Gew.-Teilen, Acrylnitril auf einen teilchenförmigen Siliconkautschuk mit einem mittleren Teilchendurchmesser ($d_{50}$) von 0,10 bis 0,50 $\mu$m, vorzugsweise von 0,10 bis 0,15 $\mu$m oder von 0,25 bis 0,50 $\mu$m, mit einem Gesamtkautschukgehalt von 30 bis 90 Gew.-%, vorzugsweise von 40 bis 80 Gew.-% und

B) 95 bis 5 Gew.-Teilen, vorzugsweise 80 bis 20 Gew.-Teilen, eines Pfropfproduktes eines Gemisches von 50 bis 100 Gew.-Teilen Styrol, $\alpha$-Methylstyrol, Vinyltoluol, vorzugsweise p-Methylstyrol, Methylmethacrylat oder Mischungen daraus und 0 bis 50 Gew.-Teilen, vorzugsweise 5 bis 40 Gew.-Teilen Acrylnitril auf einen teilchenförmigen EPDM-Kautschuk mit einem mittleren Teilchendurchmesser ($d_{50}$) von 0,20 bis 1,00 $\mu$m, vorzugsweise von 0,25 bis 0,40 $\mu$m oder von 0,35 bis 0,60 $\mu$m, mit einem Gesamtkautschukgehalt von 10 bis 50 Gew.-%, vorzugsweise von 10 bis 40 Gew.-% und

C) 10 bis 200 Gew.-Teilen, vorzugsweise 20 bis 100 Gew.-Teilen (jeweils bezogen auf 100 Gew.-Teile A + B) eines Pfropfproduktes eines Gemisches von 50 bis 100 Gew.-Teilen, vorzugsweise 60 bis 95 Gew.-Teilen Styrol, $\alpha$-Methylstyrol, Vinyltoluol vorzugsweise p-Methylstyrol, Methylmethacrylat oder Mischungen daraus und 0 bis 50 Gew.-Teilen, vorzugsweise 5 bis 40 Gew.-Teilen Acrylnitril auf einen teilchenförmigen Acrylatkautschuk mit einem mittleren Teilchendurchmesser ($d_{50}$) von 0,05 bis 1,00 $\mu$m, vorzugsweise von 0,08 bis 0,15 $\mu$m oder von 0,30 bis 0,60 $\mu$m, mit einem Gesamtkautschukgehalt von 30 bis 80 Gew.-%, vorzugsweise von 40 bis 75 Gew.-%.

Die zur Erzeugung der erfindungsgemäßen Formmassen verwendbaren Pfropfprodukte auf Basis von Siliconkautschuk werden erhalten, indem Vinylmonomere oder Vinylmonomerengemische in Gegenwart von Siliconkautschuk, insbesondere in Gegenwart von in Emulsionsform vorliegendem Siliconkautschuk radikalisch polymerisiert werden, wobei zumindest ein Teil der Monomeren auf den Kautschuk aufgepfropft wird. Geeignete Vinylmonomere sind beispielsweise Styrol, kern- oder seitenkettensubstituierte Styrole, insbesondere p-Methylstyrol und $\alpha$-Methylstyrol, halogensubstituierte Styrole, z.B. Chlor- oder Bromstyrol, Vinylnaphthalin, Derivate von $\alpha,\beta$-ungesättigten Mono- oder Dicarbonsäuren, so insbesondere $C_1$-$C_5$-Alkylester von Acrylsäure oder Methacrylsäure, vorzugsweise Methylmethacrylat, oder die Nitrile von Acrylsäure oder Methacrylsäure, Maleinsäureanhydrid, N-Phenylmaleinimid oder Mischungen daraus.

Bevorzugtes Monomerengemisch ist eine Kombination aus Styrol und/oder $\alpha$-Methylstyrol und Acrylnitril, vorzugsweise im Gewichtsverhältnis ($\alpha$-Methyl)Styrol:Acrylnitril = 1:1 bis 10:1.

Geeignete Siliconkautschuke sind beispielsweise die in DE-OS 3 629 763 beschriebenen Verbindungen, die im wesentlichen aus chemisch verbundenen Siloxangruppen der allgemeinen Formeln $R_2SiO$, $RSiO_{3/2}$, $R_2R^3SiO_{1/2}$, $SiO_{4/2}$, $R^1CH=CH-(R^2)-$ und $H-S-$ mit R = einwertiger, gesättigter Kohlenwasserstoffrest, insbesondere $CH_3$, Phenyl, $C_2H_5$, gegebenenfalls durch SH, Halogen, $C_1$-$C_6$-Oxyalkyl substituiert, $R^1$ = H, $C_1$-$C_6$-Alkyl, insbesondere H, $CH_3$, $R^2$ = Einfachbindung, $C_1$-$C_4$-Alkylen, insbesondere $-CH_2-$, $-C_2H_4$, Einfachbindung, $R^3$ = R oder OH aufgebaut sind, wobei bevorzugt auf 100 Mol-Einheiten der Formel $R_2SiO$ 0 bis 0,5 Mol Einheiten $R_2R^3SiO_{1/2}$, 0 bis 10 Mol Einheiten der Formel $RSiO_{3/2}$ und 0 bis 3 Mol Einheiten der Formel $SiO_{4/2}$ vorhanden sind.

Weitere geeignete Siliconkautschuke haben Kern/Mantel-Aufbau; Beispiele sind teilchenförmige Siliconkautschuke, die von einer Schale aus vernetztem Acrylatkautschuk umhüllt sind (vgl. DE-OS 3 617 267), oder teilchenförmige Siliconkautschuke, die einen Kern aus vernetztem Acrylatkautschuk (vgl. DE-OS 3 720 475) oder aus einem Styrol/Acrylnitril-Copolymerisat (vgl. DE-OS 3 720 476) enthalten. Bevorzugt werden die Pfropfprodukte auf Basis von Siliconkautschuken durch Emulsionspolymerisation hergestellt, wobei in Emulsionsform vorliegende, zumindest teilweise vernetzte Siliconkautschuke als Pfropfgrundlage eingesetzt werden.

Derartige Pfropfpolymerisationen sind bekannt, vorzugsweise werden sie bei Temperaturen zwischen 30°C und 100°C unter Verwendung radikalischer Initiatoren durchgeführt, wie organischer oder anorganischer Peroxide, anorganischer Persulfate, z.B. Kaliumpersulfat, Azoinitiatoren, z.B. Azobisisobutyronitril, sowie Redox-Systemen, die aus einem Oxidationsmittel, vorzugsweise einem Peroxid, und einem Reduktionsmittel bestehen, und gegebenenfalls unter Zusatz von wäßriger Emulgatorlösung (z.B. anionische oder nichtionische Emulgatoren, vorzugsweise Natrium-, Kalium- oder Ammoniumsalze langkettiger Carbonsäuren mit 10 bis 20 C-Atomen, z.B. Kaliumoleat, Alkylsulfate mit 10 bis 20 C-Atomen, Alkylsulfonate mit 10 bis 20 C-Atomen oder Alkali- bzw. Ammoniumsalze der disproportionierten Abietinsäure). Die Polymerisation kann diskontinuierlich oder kontinuierlich geführt werden; auch Monomerenzulauf ist möglich.

Außer durch Emulsionspolymerisation ist die Herstellung der Pfropfprodukte prinzipiell jedoch auch durch Suspensions-, Lösungs- oder Massepolymerisation sowie Kombinationen dieser Verfahren in an sich bekannter Weise möglich.

Die Pfropfprodukte auf Basis von Siliconkautschuken weisen einen Kautschukgehalt von 30 bis 90 Gew.-%, vorzugsweise von 40 bis 80 Gew.-%, auf. Die mittleren Teilchendurchmesser ($d_{50}$-Werte) der Siliconkautschuke sind 0,10 bis 0,50 $\mu$m, vorzugsweise 0,10 bis 0,15 $\mu$m und 0,25 bis 0,50 $\mu$m.

Die zur Erzeugung der erfindungsgemäßen Formmassen verwendeten Pfropfprodukte auf Basis von EPDM-Kautschuk werden erhalten, indem Vinylmonomere oder Vinylmonomerengemische in Gegenwart von EPDM-Kautschuk radikalisch polymerisiert werden, wobei zumindest ein Teil der Monomeren auf den Kautschuk aufgepfropft wird. Geeignete Vinylmonomere sind beispielsweise Styrol, $\alpha$-Methylstyrol, kernsubstituierte Styrole wie z.B. p-Methylstyrol, $C_1$-$C_5$-Alkylester von Acrylsäure oder Methacrylsäure, vorzugsweise Methylmethacrylat, Maleinsäureanhydrid, N-Phenylmaleinimid oder Mischungen daraus.

Bevorzugtes Monomerengemisch ist eine Kombination aus Styrol und/oder $\alpha$-Methylstyrol und Acrylnitril, vorzugsweise im Gewichtsverhältnis ($\alpha$-Methyl)Styrol:Acrylnitril = 1:1 bis 10:1.

Geeignete EPDM-Kautschuke sind z.B. Polymerisate aus Ethylen und Propylen, die zusätzlich geringe Mengen eines nicht-konjugierten Diens, z.B. Dicyclopentadien, Ethylidennorbornen, 1,4-Hexadien, 1,4-Cycloheptadien, 1,5-Cyclooctadien enthalten.

Die Herstellung dieser Pfropfprodukte ist bekannt; sie kann in Suspension oder Lösung (siehe z.B. Beispiele in EP-A 227 855) oder Emulsion (vgl. EP-A 264 721) durchgeführt werden.

Die Pfropfprodukte auf Basis von EPDM-Kautschuken weisen einen Kautschukgehalt von 10 bis 50 Gew.-%, vorzugsweise von 10 bis 40 Gew.-% auf.

Die mittleren Teilchendurchmesser ($d_{50}$-Werte) der Polymerisate sind 0,20 bis 1,00 $\mu$m, vorzugsweise 0,25 bis 0,40 $\mu$m oder 0,35 bis 0,60 $\mu$m.

Geeignete Acrylatkautschuke sind z.B. Polymerisate auf Basis von Acrylsäure-$C_1$-$C_8$-alkylester (z.B. Methyl-, Butyl-, Octyl- oder 2-Ethylhexylester der Acrylsäure) gegebenenfalls in Mischung mit bis zu 40 Gew.-% anderen Vinylmonomeren. Zur Vernetzung der Acrylatkautschuke werden polyfunktionelle Monomere copolymerisiert. Beispiele sind:

Ester von ungesättigten Carbonsäuren mit einem Polyol (vorzugsweise 2 bis 20 Kohlenstoffatome in der Estergruppe), wie Ethylenglykoldimethacrylat, Ester einer mehrbasischen Carbonsäure mit einem ungesättigten Alkohol (vorzugsweise 8 bis 30 Kohlenstoffatome im Esterrest), wie Triallylcyanurat, Triallylisocyanurat; Divinylverbindungen wie Divinylbenzol; Ester ungesättigter Carbonsäuren mit ungesättigten Alkoholen (bevorzugt 6 bis 12 Kohlenstoffatome im Esterrest), wie Allylmethacrylat; Phosphorsäureester, beispielsweise Triallylphosphat und 1,3,5-Triacryloylhexahydro-s-triazin. Besonders bevorzugte polyfunktionelle Monomere sind Triallylcyanurat, Triallylisocyanurat, Triallylphosphat, Allylmethacrylat, Ethylenglykoldimethacrylat und 1,3,5-Triacryloylhexahydro-s-triazin.

Die Menge der zur Vernetzung benutzten polyfunktionellen Monomeren ist bevorzugt 0,05 bis 10 Gew.-%, insbesondere 0,1 bis 5,0 Gew.-% (bezogen auf Gesamtmenge vernetzten Acrylatkautschuk). Weitere geeignete Acrylatkautschukkomponenten sind Verbindungen vom sogenannten Kern/Schalen-Typ, so beispielsweise teilchenförmige Acrylatkautschuke, die einen Kern aus vernetztem Polybutadien (vgl. EP-PS 34 748) enthalten.

Die Pfropfprodukte auf Basis von Acrylatkautschuken können bevorzugt durch Emulsionspolymerisation hergestellt werden, wobei in Emulsionsform vorliegende, zumindest teilweise vernetzte Acrylatkautschuke als Pfropfgrundlage eingesetzt werden.

Derartige Pfropfpolymerisationen sind bekannt; vorzugsweise werden sie bei Temperaturen von 30°C bis 100°C unter Verwendung radikalischer Initiatoren durchgeführt, beispielsweise organischer oder anorganischer Peroxide, anorganischer Persulfate z.B. Kaliumpersulfat, Azoinitiatoren, z.B. Azobisisobutyronitril, sowie Redox-Systemen, die aus einem Oxidationsmittel, vorzugsweise einem Peroxid, und einem Reduktionsmittel bestehen, und gegebenenfalls unter Zusatz von wäßriger Emulgatorlösung (z.B. anionische oder nichtionische Emulgatorkomponenten, vorzugsweise Natrium-, Kalium-oder Ammoniumsalze langkettiger Carbonsäuren mit 10 bis 20 C-Atomen, z.B. Kaliumoleat, Alkylsulfate mit 10 bis 20 C-Atomen, Alkylsulfonate mit 10 bis 20 C-Atomen oder Alkali- bzw. Ammoniumsalze der disproportionierten Abietinsäure). Die Polymerisation kann diskontinuierlich oder kontinuierlich geführt werden; auch Monomerenzulauf ist möglich.

Außer durch Emulsionspolymerisation ist die Herstellung der Pfropfprodukte prinzipiell jedoch auch durch Suspensions-, Lösungs- oder Massepolymerisation sowie Kombinationen dieser Verfahren in an sich bekannter Weise möglich.

Die Pfropfprodukte auf Basis von Acrylatkautschuken weisen einen Kautschukgehalt von 30 bis 80 Gew.-%, vorzugsweise von 40 bis 75 Gew.-%, auf. Die mittleren Teilchendurchmesser ($d_{50}$-Werte) der Acrylatkautschuk-Komponente betragen 0,05 bis 1,00 µm, vorzugsweise 0,08 bis 0,15 µm oder 0,30 bis 0,60 µm.

Besonders vorteilhafte Eigenschaften, insbesondere hohe Zähigkeit bei tiefer Temperatur und gleichzeitig gute thermoplastischer Verarbeitbarkeit, werden erreicht, wenn Pfropfprodukte mit ausgewählten Teilchengrößen miteinander kombiniert werden und zwar entweder

I) Pfropfprodukte auf Basis von Siliconkautschuk mit mittleren Teilchendurchmessern von 0,25 bis 0,50 µm mit Pfropfprodukten auf Basis von EPDM-Kautschuk mit mittleren Teilchendurchmessern von 0,25 bis 0,40 µm und Pfropfprodukten auf Basis von Acrylatkautschuk mit mittleren Teilchendurchmessern von 0,30 bis 0,60 µm

oder

II) Pfropfprodukte auf Basis von Siliconkautschuk mit mittleren Teilchengrößen von 0,10 bis 0,15 µm mit Pfropfprodukten auf Basis von EPDM-Kautschuk mit mittleren Teilchendurchmessern von 0,35 bis 0,60 µm und Pfropfprodukten auf Basis von Acrylatkautschuk mit mittleren Teilchendurchmessern von 0,30 bis 0,60 µm.

Die erfindungsgemäßen Formmassen können erzeugt werden, indem man ihre Bestandteile A), B) und C) miteinander bei höheren Temperaturen, insbesondere bei 100°C bis 280°C, z.B. in Knetern, auf Walzenstühlen oder Schneckenmaschinen mischt. Fallen A), B) und C) als Suspensionen, Lösungen oder Emulsionen an, so kann man diese mischen und gemeinsam aufarbeiten.

Den Formmassen können übliche Additive wie z.B. Antioxidantien, Gleitmittel, Flammschutzmittel, Füllstoffe, Pigmente, Antistatika in üblichen Mengen zugesetzt werden.

Die erfindungsgemäßen Mischungen sind alterungsbeständige thermoplastische Formmassen mit sehr guter Zähigkeit bei tiefen Temperaturen und guter Verarbeitbarkeit bei Verarbeitung durch Extrusion, Kalandrierung und Spritzguß.

Sie können zu alterungsbeständigen Formkörpern verarbeitet werden, sind jedoch auch als Modifikatoren für andere Kunststoffe geeignet, insbesondere für spröde Vinylmonomerharze wie Styrol/Acrylnitril-Copolymerisate (SAN-Harze), $\alpha$-Methylstyrol/Acrylnitril-Copolymerisate, Polystyrol, Polymethylmethacrylat, Polyvinylchlorid.

Dabei beträgt ihre Menge im allgemeinen 5 bis 80 Gew.-%, vorzugsweise 10 bis 70 Gew.-%, bezogen auf das gesamte modifizierte Produkt.

Eine besonders bevorzugte Mischung dieser Art besteht aus 5 bis 80 Gew.-%, bevorzugt 10 bis 70 Gew.-%, der erfindungsgemäßen Legierung und 95 bis 20 Gew.-%, bevorzugt 90 bis 30 Gew.-%, eines thermoplastischen Harzes aus 5 bis 40 Gew.-Teilen Acrylnitril und 95 bis 60 Gew.-Teilen Styrol, $\alpha$-Methylstyrol, p-Methylstyrol, Methylmethacrylat oder Mischungen daraus. Diese Harze sind bekannt. Sie werden häufig als SAN-Harze bezeichnet. Man kann sie mit dem Gemisch der Pfropfpolymerisate vereinigen, indem man sie beim Vermischen der Pfropfpolymerisate zugibt. Dabei müssen die Harze in der gleichen physikalischen Form (Feststoff, Latex, Lösung) vorliegen wie die Pfropfpolymerisate. Man kann auch feste Harze auf Innenmischern und Extrudern mit fertigen Mischungen der Pfropfpolymerisate oder nacheinander mit den Pfropfpolymerisat-Komponenten mischen.

Teilchengröße bedeutet immer mittlerer Teilchendurchmesser $d_{50}$, ermittelt mit der Ultrazentrifuge nach W. Scholtan et al., Kolloid-Z. u. Z. Polymere 250 (1972), 782 bis 796.

Beispiele und Vergleichsbeispiele

A) Pfropfprodukt auf Basis eines Siliconkautschuks mit mittlerem Teilchendurchmesser ($d_{50}$) von 135 nm.

Herstellung der Siliconkautschukemulsion: 38,4 Gew.-Teile Octamethylcyclotetrasiloxan, 1,2 Gew.-Teile Tetramethyltetravinylcyclotetrasiloxan und 1 Gew.-Teil $\gamma$-Mercaptopropylmethyldimethoxysilan werden miteinander verrührt. 1,00 Gew.-Teile Dodecylbenzolsulfonsäure werden zugeführt und anschließend 58,4 Gew.-Teile Wasser innerhalb von 1 Stunde zugegeben, wobei intensiv gerührt wird. Die Voremulsion wird mit Hilfe einer Hochdruckemulgiermaschine 2 mal bei ca. 220 bar homogenisiert. Danach werden weitere 0,5 Gew.-Teile Dodecylbenzolsulfonsäure hinzugegeben. Die Emulsion wird 2 Stunden bei 85°C und anschließend 36 Stunden bei Raumtemperatur gerührt und dann mit 5 n NaOH neutralisiert. Es resultiert eine stabile Emulsion mit einem Feststoffgehalt von ca. 36 %. Der mittlere Teilchendurchmesser ($d_{50}$) ist 135 nm.

Pfropfreaktion: In einem Reaktor werden vorgelegt:
    2107 Gew.-Teile des oben beschriebenen Latex
    1073 Gew.-Teile Wasser

Nach Initiierung mittels einer Lösung von 7,5 Gew.-Teilen Kaliumperoxodisulfat in 195 Gew.-Teilen Wasser bei 65°C werden folgende Lösungen innerhalb von 4 Stunden gleichmäßig in den Reaktor eingespeist:

Lösung 1:    540 Gew.-Teile Styrol
             210 Gew.-Teile Acrylnitril
Lösung 2:    375 Gew.-Teile Wasser
             15 Gew.-Teile Natriumsalz von $C_{14}$-$C_{18}$-Alkylsulfonsäuren

Anschließend wird innerhalb von 4 Stunden bei 65°C auspolymerisiert. Es resultiert ein Latex mit einem Feststoffgehalt von ca. 33 Gew.-%. Nach Koagulation mit einer wäßrigen Magnesiumchlorid/Essigsäure-Lösung, Filtration und Trocknung im Vakuum wird das Pfropfprodukt in Form eines weißen Pulvers erhalten.

B) Pfropfprodukt auf Basis eines Siliconkautschuks mit mittlerem Teilchendurchmesser ($d_{50}$) von 320 nm. Die Siliconkautschukemulsion wurde wie unter A) beschrieben hergestellt, jedoch unter Verwendung von 0,90 Gew.-Teilen Dodecylbenzolsulfonsäure und bei einem Druck im Homogenisierungsschritt von ca. 190 bar. Pfropfpolymerisiert wurde wie unter A) beschrieben.

C) Pfropfprodukt auf Basis eines EPDM-Kautschuks (mittlerer Teilchendurchmesser ($d_{50}$) ca. 300 nm). Koblend W 4 der Montedipe, Kautschukgehalt ca. 33 %.

D) Pfropfprodukt auf Basis eines Kern/Mantel-Acrylatkautschuks mit mittlerem Teilchendurchmesser ($d_{50}$) von ca. 480 nm.

Zu 22,44 Gew.-Teilen eines Polybutadienlatex mit einem Feststoffgehalt von 40,1 % und einem mittleren Teilchendurchmesser ($d_{50}$) von 100 nm werden 7,5 Gew.-Teile Kaliumpersulfat (gelöst in 2400 Gew.-Teilen Wasser) gegeben, wonach innerhalb von 5 Stunden bei 65°C parallel zudosiert werden:

    a) 22,5 Gew.-Teile Natriumsalz von $C_9$-$C_{18}$-Alkylsulfonsäuren (gelöst in 375 Gew.-Teilen Wasser)
    b) 1500 Gew.-Teile n-Butylacrylat und 1,5 Gew.-Teile Triallylcyanurat

Nach einer Nachreaktionszeit von 4 Stunden bei 65°C wird ein Kern/Mantel-Acrylatkautschuk mit einem Feststoffgehalt von 35 % und einem mittleren Teilchendurchmesser ($d_{50}$) von 480 nm erhalten.

4953 Gew.-Teile dieses Kern/Mantel-Latex werden auf 63°C erwärmt und mit einer Lösung von 14,5 Gew.-Teilen Kaliumperoxodisulfat in 2016 Gew.-Teilen Wasser versetzt. Danach wird unter Rühren innerhalb von 4 Stunden parallel zudosiert:

    835,2 Gew.-Teile Styrol
    324,8 Gew.-Teile Acrylnitril
    783,0 Gew.-Teile einer 7,4 %igen Lösung von $C_9$-$C_{18}$-Alkylsulfonsäuren-Natriumsalz in Wasser

Nach einer Nachreaktionszeit von 2 Stunden wird ein Pfropflatex mit einem Feststoffgehalt von 33 % erhalten, der durch Koagulation mit einer wäßrigen Magnesiumsulfat/Essigsäurelösung, Filtration und Trocknung im Vakuum in das Pfropfprodukt in Form eines weißen Pulvers überführt wird.

E) Styrol/Acrylnitril = Copolymerisat (Gewichtsverhältnis 72:28) mit einem Molekulargewicht $\overline{M}w$ von ca. 115 000 und einer molekularen Uneinheitlichkeit U = $\overline{M}w/\overline{M}n-1 \leqq 2,0$

F) $\alpha$-Methylstyrol/Acrylnitril = Copolymerisat (Gewichtsverhältnis 72:28) mit einem Molekulargewicht $\overline{M}w$ von ca. 75 000 und einer molekularen Uneinheitlichkeit U = $\overline{M}w/\overline{M}n-1 \leqq 2,0$

Die in Tabelle 1 angegebenen Gewichtsmengen der Komponenten A bis F wurden in einem Innenkneter mit 2 Gew.-Teilen Pentaerythrittetrastearat und 0,1 Gew.-Teilen eines Silikonöls bei ca. 200°C vermischt, wonach das resultierende Gemisch granuliert und anschließend durch Spritzgießen bei 240°C verarbeitet wurde (75 Sekunden-Zyklus). Die Schlagzähigkeit bei -40°C und Kerbschlagzähigkeit (Zimmertemperatur und -40°C) wurde nach DIN 53 453 (Einheit: kJ/m²) gemessen, die Wärmeformbeständigkeit (Vicat B) nach DIN 53 460 (Einheit: °C). Die Fließfähigkeit wurde durch Messung des MVI-Wertes nach DIN 53 735 U (Einheit: cm³/10 min) beurteilt.

Die physikalischen Daten der Formmassen sind in Tabelle 2 zusammengestellt.

EP 0 370 344 B1

Tabelle 1: Zusammensetzungen der Formmassen

| Formmasse | A Gew.-Teile | B Gew.-Teile | C Gew.-Teile | D Gew.-Teile | E Gew.-Teile | F Gew.-Teile |
|---|---|---|---|---|---|---|
| 1 | 15 | - | 22,5 | 12,5 | 50 | - |
| 2 | - | 15 | 22,5 | 12,5 | 50 | - |
| 3 | 13,3 | - | 20,3 | 11,2 | - | 55,2 |
| 4 | - | 13,3 | 20,3 | 11,2 | - | 55,2 |
| 5 (Vergleich) | - | 45 | - | - | 55 | - |
| 6 (Vergleich) | - | - | 68 | - | 32 | - |
| 7 (Vergleich) | - | - | - | 37,5 | 62,5 | - |
| 8 (Vergleich) | - | 40 | - | - | - | 60 |
| 9 (Vergleich) | - | - | 61 | - | - | 39 |
| 10 (Vergleich) | - | - | - | 33,5 | - | 66,5 |

Tabelle 2: Prüfdaten der Formmassen

| Formmasse | 20°C $a_k$ | -40°C $a_k$ | -40°C $a_n$ | Vicat B | MVI |
|---|---|---|---|---|---|
| 1 | 17,9 | 6,4 | 68,0 | 97 | 6,3 |
| 2 | 18,7 | 6,5 | 83,7 | 97 | 8,0 |
| 3 | 15,2 | 6,6 | 77,2 | 104 | 1,9 |
| 4 | 13,9 | 5,5 | 76,5 | 103 | 2,0 |
| 5 (Vergleich) | 15,4 | 10,6 | 96,5 | 96 | 2,2 |
| 6 (Vergleich) | 20,5 | 3,5 | 69,8 | 92 | 17,2 |
| 7 (Vergleich) | 5,6 | 2,5 | 48,0 | 102 | 8,1 |
| 8 (Vergleich) | 13,8 | 5,0 | 75,1 | 105 | 0,6 |
| 9 (Vergleich) | 15,2 | 3,9 | 70,4 | 96 | 1,5 |
| 10 (Vergleich) | 4,8 | 2,7 | 48,3 | 108 | 2,6 |

$a_k$ = Kerbschlagzähigkeit

$a_n$ = Schlagzähigkeit

**Patentansprüche**

1. Formmassen aus

A) 5 bis 95 Gew.-Teilen eines Pfropfproduktes eines Gemisches von 50 bis 100 Gew.-Teilen Styrol, $\alpha$-Methylstyrol, Vinyltoluol, Methylmethacrylat oder Mischungen daraus und 0 bis 50 Gew.-Teilen Acrylnitril auf einen teilchenförmigen Siliconkautschuk mit einem mittleren Teilchendurchmesser ($d_{50}$) von 0,10 bis 0,50 μm mit einem Gesamtkautschukgehalt von 30 bis 90 Gew.-% und

B) 95 bis 5 Gew.-Teilen eines Pfropfproduktes eines Gemisches von 50 bis 100 Gew.-Teilen Styrol, $\alpha$-Methylstyrol, Vinyltoluol, Methylmethacrylat oder Mischungen daraus und 0 bis 50 Gew.-Teilen Acrylnitril auf einen teilchenförmigen EPDM-Kautschuk mit einem mittleren Teilchendurchmesser ($d_{50}$) von 0,20 bis 1,00 μm mit einem Gesamtkautschukgehalt von 10 bis 50 Gew.-% und

C) 10 bis 200 Gew.-Teilen (bezogen auf 100 Gew.-Teile A + B) eines Pfropfproduktes eines Gemisches

7

von 50 bis 100 Gew.-Teilen Styrol, $\alpha$-Methylstyrol, Vinyltoluol, Methylmethacrylat oder Mischungen daraus und 0 bis 50 Gew.-Teilen Acrylnitril auf einen teilchenförmigen Acrylatkautschuk mit einem mittleren Teilchendurchmesser ($d_{50}$) von 0,05 bis 1,00 $\mu$m mit einem Gesamtkautschukgehalt von 30 bis 80 Gew.-%.

2. Formmassen aus

A) 20 bis 80 Gew.-Teilen eines Pfropfproduktes eines Gemisches von 60 bis 95 Gew.-Teilen Styrol, $\alpha$-Methylstyrol, Vinyltoluol, Methylmethacrylat oder Mischungen daraus und 5 bis 40 Gew.-Teilen Acrylnitril auf einen teilchenförmigen Siliconkautschuk mit einem mittleren Teilchendurchmesser ($d_{50}$) von 0,10 bis 0,15 $\mu$m oder von 0,25 bis 0,50 $\mu$m mit einem Gesamtkautschukgehalt von 40 bis 80 Gew.-%,

B) 80 bis 20 Gew.-Teilen eines Pfropfproduktes eines Gemisches von 60 bis 95 Gew.-Teilen Styrol, $\alpha$-Methylstyrol, Vinyltoluol, Methylmethacrylat oder Mischungen daraus und 5 bis 40 Gew.-Teilen Acrylnitril auf einen teilchenförmigen EPDM-Kautschuk mit einem mittleren Teilchendurchmesser ($d_{50}$) von 0,25 bis 0,40 $\mu$m oder von 0,35 bis 0,60 $\mu$m mit einem Gesamtkautschukgehalt von 10 bis 40 Gew.-% und

C) 20 bis 100 Gew.-Teilen (bezogen auf 100 Gew.-Teile A + B) eines Pfropfproduktes eines Gemisches von 60 bis 95 Gew.-Teilen Styrol, $\alpha$-Methylstyrol, Vinyltoluol, Methylmethacrylat oder Mischungen daraus und 5 bis 40 Gew.-Teilen Acrylnitril auf einen teilchenförmigen Acrylatkautschuk mit einem mittleren Teilchendurchmesser ($d_{50}$) von 0,08 bis 0,15 $\mu$m oder von 0,30 bis 0,60 $\mu$m mit einem Gesamtkautschukgehalt von 40 bis 75 Gew.-%.

3. Verwendung der Formmassen gemäß Anspruch 1 und 2, gegebenenfalls in Abmischung mit spröden thermoplastischen Vinylmonomerharzen, als thermoplastische Formmassen.

4. Formmassen nach Anspruch 1 enthaltend 5 bis 80 Gew.-% der Formmasse gemäß Anspruch 1 und 95 bis 20 Gew.-% eines thermoplastischen Harzes aus 5 bis 40 Gew.-Teilen Acrylnitril und 95 bis 60 Gew.-Teilen Styrol, $\alpha$-Methylstyrol, p-Methylstyrol, Methylmethacrylat oder Mischungen daraus.


## Claims

1. Moulding compounds of

A) 5 to 95 parts by weight of a graft product of a mixture of 50 to 100 parts by weight styrene, $\alpha$-methyl styrene, vinyl toluene, methyl methacrylate or mixtures thereof and 0 to 50 parts by weight acrylonitrile on a particulate silicone rubber with a mean particle diameter ($d_{50}$) of from 0. 10 to 0. 50 $\mu$m having a total rubber content of from 30 to 90% by weight and

B) 95 to 5 parts by weight of a graft product of a mixture of 50 to 100 parts by weight styrene, $\alpha$-methyl styrene, vinyl toluene, methyl methacrylate or mixtures thereof and 0 to 50 parts by weight acrylonitrile on a particulate EPDM rubber with a mean particle diameter ($d_{50}$) of from 0.20 to 1.00 $\mu$m having a total rubber content of from 10 to 50% by weight and

C) 10 to 200 parts by weight (based on 100 parts by weight A + B) of a graft product of a mixture of 50 to 100 parts by weight styrene, $\alpha$-methyl styrene, vinyl toluene, methyl methacrylate or mixtures thereof and 0 to 50 parts by weight acrylonitrile on a particulate acrylate rubber with a mean particle diameter ($d_{50}$) of from 0.05 to 1.00 $\mu$m having a total rubber content of from 30 to 80% by weight.

2. Moulding compounds of

A) 20 to 80 parts by weight of a graft product of a mixture of 60 to 95 parts by weight styrene, $\alpha$-methyl styrene, vinyl toluene, methyl methacrylate or mixtures thereof and 5 to 40 parts by weight acrylonitrile on a particulate silicone rubber with a mean particle diameter ($d_{50}$) of from 0.10 to 0.15 $\mu$m or from 0.25 to 0.50 $\mu$m having a total rubber content of from 40 to 80% by weight and

B) 80 to 20 parts by weight of a graft product of a mixture of 60 to 95 parts by weight styrene, $\alpha$-methyl styrene, vinyl toluene, methyl methacrylate or mixtures thereof and 5 to 40 parts by weight acrylonitrile on a particulate EPDM rubber with a mean particle diameter ($d_{50}$) of from 0.25 to 0.40 $\mu$m or from 0.35 to 0.60 $\mu$m having a total rubber content of from 10 to 40% by weight and

C) 20 to 100 parts by weight (based on 100 parts by weight A + B) of a graft product of a mixture of 60 to 95 parts by weight styrene, $\alpha$-methyl styrene, vinyl toluene, methyl methacrylate or mixtures thereof and 5 to 40 parts by weight acrylonitrile on a particulate acrylate rubber with a mean particle diameter ($d_{50}$) of from 0.08 to 0.15 $\mu$m or from 0.30 to 0.60 $\mu$m having a total rubber content of from 40 to 75% by weight.

3. The use of the moulding compounds claimed in claims 1 and 2, optionally in admixture with brittle thermoplastic vinyl monomer resins, as thermoplastic moulding compounds.

4. Moulding compounds as claimed in claim 1, containing from 5 to 80% by weight of the moulding compound claimed in claim 1 and from 95 to 20% by weight of a thermoplastic resin of 5 to 40 parts by weight acrylonitrile and 95 to 60 parts by weight styrene, $\alpha$-methyl styrene, p-methyl styrene, methyl methacrylate or mixtures thereof.

**Revendications**

1. Matières à mouler consistant en
A) 5 à 95 parties en poids d'un produit de greffage d'un mélange de 50 à 100 parties en poids de styrène, d'$\alpha$-méthylstyrène, de vinyltoluène, de méthacrylate de méthyle ou leurs mélanges et 0 à 50 parties en poids d'acrylonitrile sur un caoutchouc de silicone à l'état de particules au diamètre moyen $d_{50}$ de 0,10 à 0,50 $\mu$m, à une teneur totale en caoutchouc de 30 à 90 % en poids, et
B) 95 à 5 parties en poids d'un produit de greffage d'un mélange de 50 à 100 parties en poids de styrène, d'$\alpha$-méthylstyrène, de vinyltoluène, de méthacrylate de méthyle ou leurs mélanges et 0 à 50 parties en poids d'acrylonitrile sur un caoutchouc EPDM à l'état de particules au diamètre moyen $d_{50}$ de 0,20 à 1,00 $\mu$m, à une teneur totale en caoutchouc de 10 à 50 % en poids, et
C) 10 à 20 parties en poids (pour 100 parties en poids de A) + B)) d'un produit de greffage d'un mélange de 50 à 100 parties en poids de styrène, d'$\alpha$-méthylstyrène, de vinyltoluène, de méthacrylate de méthyle ou leurs mélanges et 0 à 50 parties en poids d'acrylonitrile sur un caoutchouc d'acrylate à l'état de particules au diamètre moyen $d_{50}$ de 0,05 à 1,00 $\mu$m, à une teneur totale en caoutchouc de 30 à 80 % en poids.

2. Matières à mouler consistant en
A) 20 à 80 parties en poids d'un produit de greffage d'un mélange de 60 à 95 parties en poids de styrène, d'$\alpha$-méthylstyrène, de vinyltoluène, de méthacrylate de méthyle ou leurs mélanges et 5 à 40 parties en poids d'acrylonitrile sur un caoutchouc de silicone à l'état de particules au diamètre moyen $d_{50}$ de 0,10 à 0,15 $\mu$m ou de 0,25 à 0,50 $\mu$m, à une teneur totale en caoutchouc de 40 à 80 % en poids,
B) 80 à 20 parties en poids d'un produit de greffage d'un mélange de 60 à 95 parties en poids de styrène, d'$\alpha$-méthylstyrène, de vinyltoluène, de méthacrylate de méthyle ou leurs mélanges et 5 à 40 parties en poids d'acrylonitrile sur un caoutchouc EPDM à l'état de particules au diamètre moyen $d_{50}$ de 0,25 à 0,40 $\mu$m ou de 0,35 à 0,60 $\mu$m, à une teneur totale en caoutchouc de 10 à 40 % en poids et
C) 20 à 100 parties en poids (pour 100 parties en poids de A) + B)) d'un produit de greffage d'un mélange de 60 à 95 parties en poids de styrène, d'$\alpha$-méthylstyrène, de vinyltoluène, de méthacrylate de méthyle ou leurs mélanges et de 5 à 40 parties en poids d'acrylonitrile sur un caoutchouc d'acrylate à l'état de particules au diamètre moyen $d_{50}$ de 0,08 à 0,15 $\mu$m ou de 0,30 à 0,60 $\mu$m, à une teneur totale en caoutchouc de 40 à 75 % en poids.

3. Utilisation des matières à mouler selon les revendications 1 et 2, éventuellement en mélange avec des résines thermoplastiques de monomères vinyliques qui sont cassantes, en tant que matières à mouler thermoplastiques.

4. Matières à mouler selon la revendication 1, contenant 5 à 80 % en poids de la matière à mouler de la revendication 1 et 95 à 20 % en poids d'une résine thermoplastique de 5 à 40 parties en poids d'acrylonitrile et 95 à 60 parties en poids de styrène, d'$\alpha$-méthylstyrène, de p-méthylstyrène, de méthacrylate de méthyle ou leurs mélanges.